# FASCICULE DE BREVET EUROPEEN

(11) **EP 2 740 312 B1**
(45) Date de publication et mention de la délivrance du brevet: **15.04.2020**
(21) Numéro de dépôt: 12743957.8
(22) Date de dépôt: 01.08.2012
(51) Int. Cl.: H04W 74/08

(54) **PROCÉDÉ DE GESTION DE L'ACCÈS À UN MÉDIUM DE COMMUNICATION PARTAGÉ**
VERFAHREN ZUR VERWALTUNG DES ZUGRIFFS AUF EIN GEMEINSAM GENUTZTES KOMMUNIKATIONSMEDIUM
METHOD FOR MANAGING ACCESS TO A SHARED COMMUNICATION MEDIUM

(30) Priorité: 03.08.2011 FR 1157115
(43) Date de publication de la demande: 11.06.2014
(73) Titulaire: Safran Electronics & Defense, 92100 Boulogne-Billancourt (FR)
(72) Inventeur: CHIODINI, Alain, F-75015 Paris (FR)
(74) Mandataire: Cabinet Le Guen Maillet
(86) Numéro de dépôt international: PCT/EP2012/065000
(87) Numéro de publication internationale: WO 2013/017614

(56) Documents cités:
- WO-A2-02/43318
- US-B1- 6 539 028
- CHI-HSIANG YEH: "A new scheme for effective MAC-layer diffserv supports in mobile ad hoc networks and multihop wireless LANs", VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 mai 2004 (2004-05-17), pages 2149-2155, XP010766541, DOI: 10.1109/VETECS.2004.1390654 ISBN: 978-0-7803-8255-8
- ANONYMOUS ED - ANONYMOUS: "IEEE Standard for Information technology-Telecommunications and information exchange between systems-Local and metropolitan area networks-Specific requirements - Part 11: Wireless LAN Medium Access Control (MAC) and Physical Layer (PHY) Specifications; IEEE Std 802.11-2007 (Revision of IEEE Std 802.", 12 juin 2007 (2007-06-12), IEEE STANDARD; [IEEE STANDARD], IEEE, PISCATAWAY, NJ, USA, PAGE(S) C1 - 1184, XP017601788, ISBN: 978-0-7381-5656-9 alinéas [9.1.1], [09.2]
- "IEEE Standard for Information Technology--Telecommunications and Information Exchange Between Systems--Local and Metropolitan Area Networks--Specific Requirements Part 3: Carrier Sense Multiple Access With Collision Detection (CSMA/CD) Access Method and Physical Layer Specifications - Section One;IE", IEEE STANDARD, IEEE, PISCATAWAY, NJ, USA, 26 décembre 2008 (2008-12-26), pages C1-597, XP017604319, ISBN: 973-0-7381-5796-2

## Description

La présente invention concerne le domaine des procédés de gestion de l'accès à un médium de communication partagé par une pluralité de dispositifs de communication par radio.

L'invention se place dans le contexte des systèmes de communication radio du type TDMA (*Time Division Multiple Access* en anglais).

Le système est TDMA dans le sens où le temps est divisé en trames servant à la communication. Chaque trame est elle-même divisée en intervalles de temps élémentaires appelés intervalles de temps (*time slot* en anglais) pour la communication. Cette communication est également multi fréquence, c'est-à-dire que le système peut communiquer sur une pluralité de fréquences. Le canal de transmission peut donc être vu comme un arrangement à deux dimensions, une dimension temporelle et une dimension fréquentielle, qui définit des unités de communication élémentaires (*slots* en anglais) correspondant à un couple intervalle de temps et fréquence permettant la communication.

Typiquement, bien que ce ne soit pas toujours le cas, le système est semi-duplex dans le sens où la communication base vers combiné, appelée communication descendante, et la communication combiné vers base, appelée communication montante, ne sont pas simultanées, mais réparties sur des intervalles de temps différents. Typiquement, la trame est divisée en deux parties, une partie dédiée au trafic descendant et une partie dédiée au trafic montant.

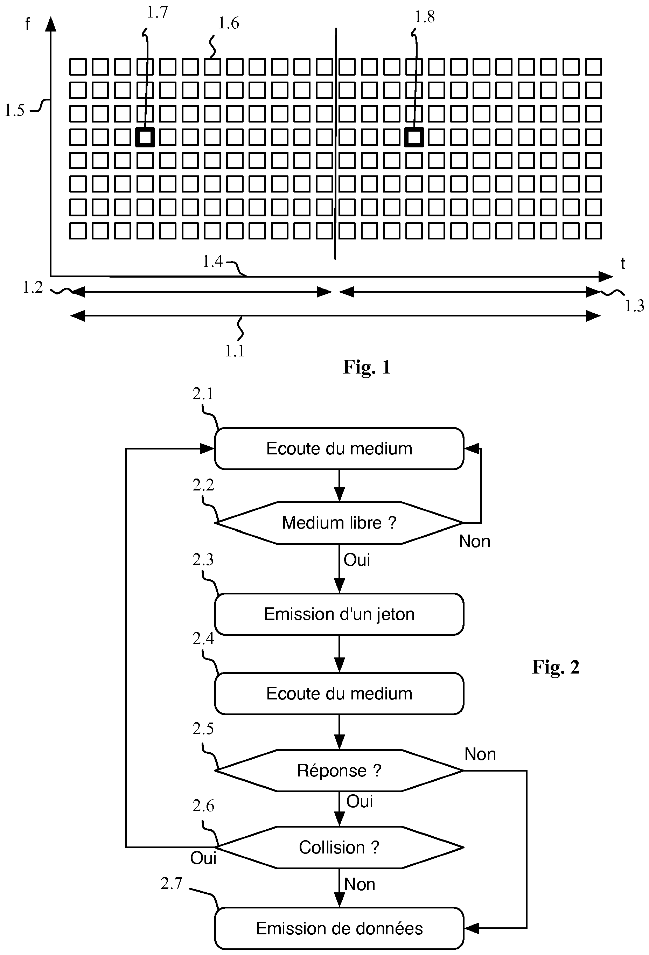

La Fig. 1 illustre la structure de la trame dans l'exemple de réalisation de l'invention. La trame 1.1 est divisée en une première partie 1.2 consacrée au trafic descendant émis par la base vers les combinés, et une seconde partie 1.3 consacrée au trafic montant des combinés vers la base. Elle s'exprime selon l'axe du temps 1.4 et l'axe fréquentiel 1.5. Elle définit des unités élémentaires de communication 1.6 définies par une fréquence donnée et d'une durée équivalente à l'intervalle temporel élémentaire. La durée de la trame est, dans l'exemple de réalisation, de l'ordre de 10 ms, divisée en deux fois 12 intervalles élémentaires de temps. Cette trame se répète périodiquement.

Le système de communication contexte de l'invention dispose en outre d'un canal de diffusion. Ce canal de diffusion est un médium de communication partagé par une pluralité de terminaux de communication. Chaque terminal est autorisé à émettre sur ce canal partagé des messages ou des données à destination de l'ensemble des terminaux accédant au canal de diffusion. Ce canal de diffusion est implémenté sous la forme d'au moins une unité de communication élémentaire 1.7 au sein de la trame. Dans certains modes de réalisation, le canal de diffusion est constitué d'une paire d'unités de communication élémentaires 1.7 et 1.8 correspondantes dans chaque demi-trame. L'une des unités sert alors à l'émission de données par le terminal, l'autre sert à la réception selon le schéma de la trame. Le canal peut également être constitué d'une pluralité d'unités au besoin.

Le canal de diffusion étant partagé entre les terminaux, il peut se produire que plusieurs terminaux décident d'émettre sur ce canal au même moment et qu'il se produise des collisions empêchant la réception des données. Il est donc nécessaire de prévoir un procédé de gestion des collisions au sein de ce système.

L'invention vise à résoudre les problèmes précédents par un procédé d'accès à un médium de communication radio partagé entre une pluralité de terminaux de communication. Ce procédé est basé sur une variante du protocole d'accès CSMA/CD (*Carrier Sense Multiple Access* / *Collision Détection* en anglais). Ce procédé est basé sur l'écoute du médium et l'envoi d'un jeton pour demander l'autorisation d'émettre. Les terminaux qui reçoivent ce jeton émettent alors un acquittement visant à autoriser la saisie du médium ou un message de collision s'ils reçoivent plusieurs jetons simultanément. Dans ce dernier cas, l'émetteur remet sa tentative de saisie à plus tard.

L'état de la technique est représenté par les documents US 6 539 028 B1 et "IEEE Standard for Information Technology-Telecommunications and information exchange between systems - Local and metropolitan area networks - Specific requirements - Part 11 : Wireless LAN Medium Access Control (MAC) and Physical Layer (PHY) Spécifications ; IEEE Std 802.11 -2007".

L'invention concerne un procédé d'accès à un médium de communication radio partagé entre une pluralité de terminaux de communication, ledit médium étant défini par un espace temps fréquence dédié au sein d'une trame TDMA, caractérisé en ce qu'il comporte les étapes suivantes par un terminal souhaitant émettre des données à destination des autres terminaux: une étape d'écoute du médium lors d'un premier intervalle de temps, si le médium est libre, une étape d'émission d'un jeton sur le médium lors d'un second intervalle de temps, une étape de réception d'une réponse émise par les récepteurs ayant reçu ce jeton lors de l'intervalle de temps suivant le second intervalle de temps, une étape d'attente et d'écoute du médium si la réponse est un message decollision indiquant que le récepteur émettant la réponse a reçu plusieurs jetons, une étape d'émission de données si la réponse reçue est un acquittement.

Selon un mode particulier de réalisation de l'invention, l'étape d'émission de données se produit également en l'absence de réception d'une réponse par le terminal ayant émis un jeton.

Selon un mode particulier de réalisation de l'invention, le canal de diffusion étant divisé en quartiers associés à chaque type de message, l'étape d'émission ou de réception de message est effectuée dans le quartier associé.

Selon un mode particulier de réalisation de l'invention, les messages échangés sont constitués d'une sinusoïde pure.

Selon un mode particulier de réalisation de l'invention, le procédé comporte en outre : une étape d'appariement des intervalles de temps successifs constituant le médium de diffusion ; une étape de division de l'ensemble des terminaux en deux sous-ensembles, un premier sous-ensemble de terminaux dits salués où les intervalles successifs appairés sont tels que le premier est dédié à l'émission et un second sous-ensemble de terminaux dits saluants où les intervalles successifs appairés sont tels que le premier est dédié à la réception et une étape où, préalablement à l'émission de données par un terminal saluant, celui-ci et tous les terminaux salués basculent et changent de statut saluant - salué.

Selon un mode particulier de réalisation de l'invention, l'étape d'émission des données s'étale sur plusieurs intervalles de temps.

L'invention concerne également un terminal accédant à un médium de communication radio partagé entre une pluralité de terminaux de communication, ledit terminal souhaitant émettre des données à destination des autres terminaux qui comporte : des moyens pour écouter le médium ; si le médium est libre, des moyens pour émettre un jeton sur ce médium ; des moyens pour réceptionner une réponse émise par les récepteurs ayant reçu ce jeton ; des moyens pour attendre et écouter le médium si la réponse est un message de collision indiquant que plusieurs terminaux ont émis un jeton et des moyens pour émettre des données si la réponse reçue est un acquittement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre la structure d'une trame TDMA selon un exemple de réalisation de l'invention.
La Fig. 2 illustre l'algorithme général d'un exemple de réalisation du procédé d'accès au médium de diffusion.
La Fig. 3 illustre le découpage du canal de diffusion selon un exemple de réalisation de l'invention.
La Fig. 4 illustre la structure du jeton selon un exemple de réalisation de l'invention.
La Fig. 5 illustre l'appariement des intervalles de temps constituant le canal de diffusion.
La Fig. 6 illustre la saisie du canal de diffusion par un terminal saluant selon un exemple de réalisation de l'invention.
La Fig. 7 illustre la saisie du canal de diffusion par un terminal saluant selon un exemple de réalisation de l'invention avec une collision préalable.

Un ensemble de terminaux partage l'utilisation de la trame TDMA telle que décrite dans le préambule. Ces terminaux partagent donc l'accès au canal de diffusion qui y est inséré. Ce canal de diffusion est donc caractérisé par un intervalle de temps et de fréquence pouvant être utilisé par tous les terminaux pour émettre des données à destination de tous les autres terminaux. Lorsqu'un terminal n'a pas de données à émettre sur ce canal, il l'écoute pour pouvoir recevoir les données émises par les autres terminaux sur ce canal. Typiquement les systèmes selon l'invention ne permettent pas l'émission de données et l'écoute simultanée par un même terminal lors d'un même intervalle de temps.

Si plusieurs terminaux émettent en même temps des données sur le canal de diffusion, il s'ensuit que ces émissions se brouillent mutuellement et ne peuvent donc pas être reçues correctement par les différents destinataires.

Il est connu d'utiliser des algorithmes du type CSMA/CD sur des médiums de diffusion du type Ethernet par exemple. A la différence des systèmes envisagés, les systèmes implémentant les procédés de type CSMA/CD disposent d'un médium de diffusion disponible dans le temps et les terminaux usant de ce médium peuvent détecter eux-mêmes la collision survenant lors de l'émission de données. Typiquement ces systèmes sont en écoute permanente sur le médium et décident d'émettre des données lorsque le médium est libre depuis un temps donné. Si une collision se produit lors de cette émission, l'émetteur s'en aperçoit, car il ne reçoit pas les données qu'il a lui-même émises. Il attend alors un temps donné et refait une tentative d'émission.

Ce procédé ne peut pas être utilisé dans le cadre des systèmes selon l'invention. D'une part, il n'est pas possible d'écouter et d'émettre en même temps, et donc de détecter le fait qu'une émission est entrée en collision avec une autre. D'autre part, le médium n'est pas disponible en permanence, mais uniquement lors d'un intervalle de temps spécifique au sein d'une trame temporelle se reproduisant périodiquement.

Selon l'invention, tous les terminaux sont en écoute du canal de diffusion. Lorsqu'un terminal souhaite émettre des données, il procède alors selon le procédé décrit Fig. 2. Lors d'une première étape 2.1, il écoute le médium pendant un intervalle de temps, comme tous les terminaux. Il détecte si le médium est libre, étape 2.2, ou si un autre terminal a émis des données lors de cet intervalle de temps. Si le médium n'est pas libre, il attend pour émettre et reste en état d'écoute du médium 2.1. Avantageusement, il se prépare à écouter les données émises par l'autre terminal l'ayant devancé. On appelle intervalle de temps suivant l'intervalle de temps correspondant au canal de diffusion pour la trame suivante ou alors éventuellement pour la demi-trame suivante si le canal de diffusion est implémenté par un intervalle de temps lors de chaque demi-trame. Si le médium est libre, alors, lors de l'intervalle de temps suivant, le terminal émet un jeton pour demander l'accès au canal de diffusion ; c'est l'étape 2.3.

Lors de l'intervalle de temps suivant l'émission de son jeton, il écoute de nouveau le médium ; c'est l'étape 2.4. Il lui faut, en effet, déterminer si son jeton est bien transmis sans collision aux autres terminaux. Il détermine alors s'il reçoit une réponse au jeton qu'il a émis ; c'est l'étape 2.5. Dans le cas où aucune réponse n'est reçue, on en déduit qu'a *priori* aucun terminal n'est à portée donc en mesure de recevoir les données que l'on a à émettre. On peut alors choisir d'émettre tout de même nos données ou pas ; c'est un choix arbitraire d'implémentation. Selon l'exemple de réalisation de la Fig. 2, les données sont alors émises lors de l'étape 2.7.

Dans le cas où l'on reçoit au moins une réponse, on doit déterminer s'il y a eu collision ou pas lors de notre émission de jeton. Pour cela, les terminaux qui reçoivent le jeton répondent en fonction du nombre de jetons qu'ils ont reçus. Dans le cas où ils reçoivent un seul jeton, ils répondent par un acquittement. Dans le cas où ils reçoivent plusieurs jetons, même s'ils ne sont pas en mesure de compter les jetons reçus et d'en déterminer le nombre exact, ils répondent par un message de collision. Le terminal ayant émis le jeton analyse donc, lors de l'étape 2.6, les réponses reçues pour déterminer s'il y a eu collision. S'il a reçu au moins un message de collision, alors il attend un temps donné avant de refaire une tentative ; il repasse donc à l'étape 2.1. Si seuls des acquittements sont reçus, le terminal peut alors envoyer ses données lors de l'étape 2.7.

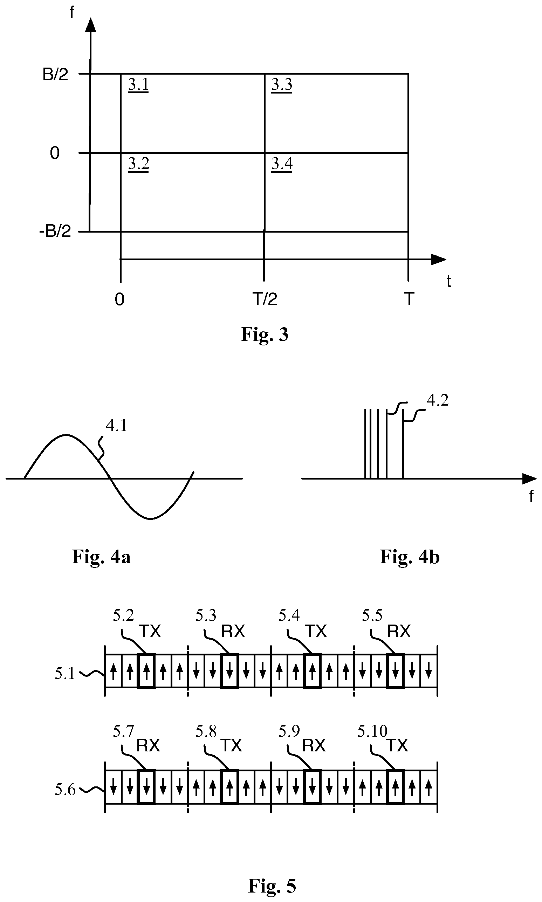

Avantageusement, le médium associé au canal de diffusion, qui est constitué d'un espace-temps fréquence, est divisé en quartiers associés à chaque type de message échangé. Cette division peut être faite temporellement, fréquentiellement ou mêler une division fréquentielle et temporelle. La Fig. 3 illustre un exemple d'une telle division. Selon cet exemple, le médium associé au canal de diffusion a une durée temporelle de *T* et une bande fréquentielle de *B.* Ce médium est divisé en quatre quartiers 3.1, 3.2, 3.3 et 3.4. Le quartier 3.1 ([0, T/2], [0, B/2]) sert à véhiculer les jetons. Le quartier 3.2 ([0, T/2], [-B/2, 0]) sert à véhiculer les acquittements. Le quartier 3.3 ([T/2, T], [0, B/2]) sert à véhiculer les messages de collision. Le quartier 3.4 ([T/2, T], [-B/2, 0]) sert à véhiculer des acquittements pour le trafic de données. Les messages de données, quant à eux, utilisent la totalité du médium. On comprend que cette répartition est un exemple non limitatif et que la répartition peut être différente. Le fait de diviser le médium de diffusion ainsi par quartiers permet de faciliter la discrimination des différents types de message.

Le jeton peut être constitué de suites binaires modulées ayant, par exemple, la même largeur spectrale que les paquets de parole ou de données échangés.

Avantageusement, les signaux sont composés d'une sinusoïde pure dont la durée est inférieure à *T*/*2,* où *T* est la durée de l'intervalle de temps associé au médium de diffusion. La fréquence de cette sinusoïde est choisie dans l'intervalle de fréquence composant le médium de diffusion. Avantageusement, cette fréquence est comprise dans la bande définissant le quartier lorsque le médium est divisé.

La Fig. 4a illustre une telle sinusoïde 4.1 utilisée comme signal, par exemple comme jeton. La Fig. 4b illustre un ensemble de tels jetons tels qu'ils sont reçus par un terminal et représentés dans l'espace des fréquences. On voit que, chaque sinusoïde étant pure, elle se traduit par un pic 4.2 dans l'espace des fréquences. Ces pics sont légèrement décalés les uns des autres du fait des dérives en fréquence affectant naturellement les radios des différents nœuds du réseau.

L'utilisation de telles sinusoïdes pures comme signal est avantageuse à plus d'un titre.

Cela permet une augmentation de la portée du signal du fait que la densité spectrale de puissance est élevée sur un espace fréquentiel extrêmement réduit. Ces signaux sont reçus avec un rapport signal à bruit élevé et leur détection est ainsi facilitée.

Ces sinusoïdes peuvent être reçues sur le même médium sans interférer les unes avec les autres en raison des dérives en fréquence affectant naturellement les radios des différents nœuds du réseau. Elles peuvent aussi aider à l'acquisition et au maintien de la synchronisation des récepteurs.

De plus, si les terminaux sont statiques ou se déplacent à faible vitesse, le canal de propagation n'affecte pas les caractéristiques des jetons sinusoïdaux, si ce n'est leur amplitude de sorte qu'il n'est pas nécessaire de les égaliser au moment de leur traitement.

Avantageusement, il est possible de les compter. Ainsi l'émetteur d'un jeton est à même de compter les messages reçus en retour et donc de dimensionner ainsi la taille du réseau. Connaissant, au moins de manière approximative, le nombre de terminaux dans le réseau peut lui permettre, par exemple, de déterminer la taille de la fenêtre de contention. Plus le nombre de terminaux est élevé, plus la taille de la fenêtre de contention sera choisie élevée. Cette fenêtre est la fenêtre au sein de laquelle est tiré aléatoirement le moment d'un nouvel essai pour l'émission d'un jeton en cas de collision.

Dans la suite, on va appairer les intervalles de temps successifs constituant le médium de diffusion. Ceci est illustré par la Fig. 5. Sur cette figure, on représente deux trames successives pour deux cas de figure. Le premier cas, 5.1, illustre une première trame constituée de deux demi-trames, la première étant dédiée à l'émission (TX) et la seconde à la réception (RX). Chaque demi-trame contient un intervalle de temps, 5.2 et 5.3, réservé au canal de diffusion. Dans ce cas, l'utilisation du canal de diffusion se fait alternativement en émission et en réception conformément au mode trame. On qualifie de mode trame l'ordre des demi-trames, c'est-à-dire que selon un premier mode trame, la première demi-trame est consacrée à l'émission et la seconde à la réception. Dans un second mode trame, la première demi-trame est consacrée à la réception et la seconde à l'émission.

On voit donc que sur la Fig. 5, les trames 5.1 sont dans le premier mode trame et les trames 5.6 dans le second mode trame. Conformément à ceci, les intervalles du canal de diffusion 5.2, 5.4, 5.8 et 5.10 sont réservés à l'émission, tandis que les intervalles 5.3, 5.5, 5.7 et 5.9 sont consacrés à la réception.

Alternativement, lorsqu'un seul intervalle est dédié au médium de diffusion au sein de la trame, on peut appairer de façon similaire deux intervalles successifs et leur attribuer un mode trame pour déterminer lequel des deux intervalles est dédié à l'émission et lequel est dédié à la réception.

Un terminal est dit salué si les intervalles successifs appairés sont tels que le premier est dédié à l'émission. Un terminal est dit saluant si les intervalles successifs appairés sont tels que le premier est dédié à la réception.

Selon un mode particulier de réalisation de l'invention, on divise l'ensemble des terminaux en deux sous-ensembles. Un premier sous-ensemble est constitué de terminaux salués tandis que le second est constitué de terminaux saluants. Le but est que, à un instant donné, seuls les terminaux saluants soient autorisés à émettre sur le canal de diffusion. La répartition des terminaux dans les deux sous-ensembles est arbitraire. Avantageusement, cette répartition assure que les deux sous-ensembles sont sensiblement équivalents en nombre. Par exemple, un tirage aléatoire au démarrage du terminal peut lui attribuer la caractéristique de salué ou de saluant. Dans l'exemple de réalisation basé sur le système DECT, il est possible de répartir les terminaux dans un groupe ou dans l'autre en fonction de la parité de leur numéro d'indentification temporaire appelé TPUI.

Avantageusement, pour permettre à tous les terminaux de pouvoir émettre, on peut, soit alterner le statut de chaque terminal, soit retirer aléatoirement un nouveau statut périodiquement. On appelle ici statut du terminal le fait d'être salué ou saluant.

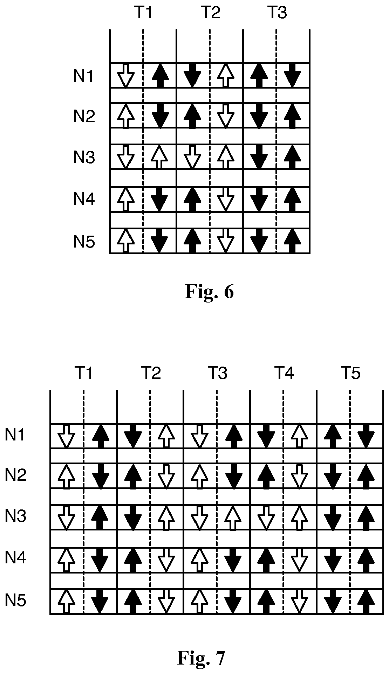

La prise du canal de diffusion par un terminal saluant est décrite en relation avec la Fig. 6. Une flèche vers le haut illustre l'émission, une flèche vers le bas la réception. Lorsque la flèche est pleine, cela illustre une émission ou une réception de donnée, lorsqu'elle est vide, aucune donnée n'est en fait transmise. Les terminaux sont numérotés de N1 à N5. La figure illustre 3 trames numérotées T1 à T3. Les terminaux N1 et N3 sont des terminaux saluants du fait que la première demi-trame est en réception. Les terminaux N2, N4 et N5 sont des terminaux salués du fait que la première demi-trame est en émission pour eux.

Lors d'une première étape, les terminaux saluants écoutent le médium ; cela se passe lors de la première demi-trame de T1. Dans ce mode de réalisation, l'intervalle de temps rythmant les étapes est constitué des demi-trames. Seul N1 souhaite émettre des données. Ne détectant aucun trafic lors de la première demi-trame, N1 émet donc un jeton lors de la seconde demi-trame de T1. Ce jeton est reçu par les terminaux salués N2, N4 et N5. Le terminal saluant N3 ne reçoit pas le jeton de N1 du fait qu'il est positionné en émission lors de cette demi-trame ; il n'est donc pas averti de la volonté de ce dernier de saisir le canal.

Lors de la première demi-trame de la seconde trame T2, les terminaux salués ayant reçu le jeton de N1 émettent un acquittement qui est reçu par N1. N3 ne participe pas à la communication. N1 recevant des acquittements et aucun message de collision sait qu'il peut saisir le canal de diffusion pour émettre ses données lors de la trame suivante, la trame T3. De même, les terminaux salués N2, N4 et N5 savent que N1 va saisir le canal, car il était le seul à avoir émis un jeton. Alors, tous ces terminaux basculent et changent de statut saluant - salué, à part N3 qui n'est pas au courant. La saisie du canal implique que le terminal saluant ayant obtenu le canal et tous les terminaux salués changent de statut. Ainsi, lors de la première demi-trame suivante, N1 est le seul terminal positionné en émission, il peut donc émettre ses données. Tous les autres terminaux sont positionnés en réception, même les terminaux saluants qui n'étaient pas avertis de la saisie du canal par N1. Les données émises par N1 sont donc bien diffusées à l'ensemble des terminaux.

Avantageusement, ces terminaux émettent un acquittement lors de la seconde demi-trame de T3 pour signifier à N1 la bonne réception des données.

Les terminaux reprennent alors leur statut initial. Selon un mode de réalisation particulier, on utilise ce moment pour refaire un tirage aléatoire des statuts des différents terminaux.

Avantageusement, si la quantité de données que N1 doit émettre est grande, on peut avoir plusieurs trames ayant le même schéma que T3 qui se suivent. Lors de chacune de ces trames, N1 émet des données à destination des autres terminaux. L'étape d'émission de données s'étale alors sur plusieurs intervalles de temps. Avantageusement, ces données sont acquittées lors de la seconde demi-trame. Alternativement, un seul acquittement a lieu lorsque toutes les données ont été transmises.

La Fig. 7 illustre la situation lorsque plusieurs terminaux saluants, ici les terminaux N1 et N3, souhaitent émettre des données et qu'une collision se produit. Après une étape d'écoute lors de la première demi-trame de T1, N1 et N3 émettent un jeton pendant la seconde demi-trame de T1. Il s'ensuit que chacun des terminaux salués N2, N4 et N5 émet un signal de collision, et non plus un acquittement, lors de la première demi-trame de T2. Ces signaux de collision sont reçus par les terminaux saluants N1 et N3. Ces terminaux tirent alors une valeur aléatoire d'attente au sein d'une fenêtre de contention. On suppose ici que N1 obtient le droit de retenter la saisie du canal dans la foulée tandis que N3 attend quelques trames. De ce fait, les trames T3, T4 et T5 reprennent le schéma des trames T1, T2 et T3 de la Fig. 6 et illustre la prise de canal par N1.

Ce mode de réalisation où chaque terminal tire au hasard le statut dans lequel il va se trouver permet de réduire les collisions en diminuant le nombre de terminaux pouvant avoir accès au canal à un instant donné. Cette diminution se fait au prix de délais supplémentaires.

Selon un mode de réalisation particulier, les acquittements sont omis. Dans ce cas, un terminal ayant émis un jeton considère qu'il peut émettre en l'absence de réception d'un signal de collision.

L'homme du métier comprend que les différentes variantes exposées peuvent se combiner. En particulier, il est possible de combiner le mode de réalisation à base de terminaux salués et saluants avec un signal formé d'une sinusoïde pure. On peut également combiner ces deux modes de réalisation avec la division du canal de diffusion en quartiers.

Selon un mode alternatif de réalisation de l'invention, on applique la même méthode dans un système de communication radio non TDMA. Si nous prenons, par exemple, le cas d'un système WiFi, nous n'avons plus de ressource temps fréquence périodique. Dans ce mode de réalisation, les terminaux étant initialement placés en écoute du médium, l'invention fonctionne selon l'organigramme de la Fig. 2 comme décrit ci-après.

Lors de l'étape 2.1, le terminal écoute le médium. Contrairement au premier mode de réalisation, cette écoute n'est pas contrainte dans un intervalle de temps déterminé, mais c'est le mode par défaut dans lequel se trouve le terminal lorsqu'il n'a pas de données à émettre.

Lorsqu'il veut émettre des données, le terminal détermine si le médium qu'il écoute est libre ; c'est l'étape 2.2.

Si le médium est libre, il émet un jeton lors d'une étape 2.3. Le moment d'émission du jeton est libre et non contraint par la trame comme dans le premier mode de réalisation.

Dès que le jeton est émis, il repasse en mode écoute pour attendre une réponse ; c'est l'étape 2.4.

Les terminaux recevant un tel jeton vont y répondre. Ils vont déterminer s'il y a une collision. La collision est définie de manière un peu différente par rapport au premier mode de réalisation. On détermine un état de collision lorsque deux jetons sont émis à des instants tels qu'ils se chevauchent dans le temps. Ce chevauchement peut être total ou partiel. Dans le cas contraire, lorsque le jeton est reçu intégralement par le terminal récepteur sans chevauchement, une réponse est émise sous la forme d'un acquittement. Si un chevauchement, même partiel, est détecté, le terminal récepteur émet un signal de collision.

Le terminal émetteur attend donc une réponse lors de l'étape 2.5. Il teste alors si la réponse reçue est un signal de collision lors de l'étape 2.6. Si c'est le cas, il bascule de nouveau en mode écoute à l'étape 2.1. Sinon, il émet ses données lors de l'étape 2.7.

On constate donc que, même en l'absence de trame périodique, l'invention peut également s'appliquer à d'autres systèmes radio, comme par exemple le WiFi.

Avantageusement, ce mode de réalisation peut se combiner avec des jetons implémentés sous la forme de signaux sinusoïdaux et d'autres caractéristiques avantageuses du premier mode de réalisation.

Seul le mode de réalisation basé sur une répartition des terminaux en terminaux saluants et salués ne peut pas se combiner avec ce second mode de réalisation.

## Revendications

1. Procédé d'accès à un médium de communication radio partagé entre une pluralité de terminaux de communication, ledit médium étant défini par un espace temps fréquence dédié au sein d'une trame TDMA, **caractérisé en ce qu'**il comporte les étapes suivantes par un terminal souhaitant émettre des données à destination des autres terminaux :
- une étape (2.1) d'écoute du médium lors d'un premier intervalle de temps,
- si le médium est libre, une étape (2.3) d'émission d'un jeton sur le médium lors d'un second intervalle de temps,
- une étape (2.5) de réception d'une réponse émise par les récepteurs ayant reçu ce jeton lors de l'intervalle de temps suivant le second intervalle de temps,
- une étape (2.1) d'attente et d'écoute du médium si la réponse est un message de collision indiquant que le récepteur émettant la réponse a reçu plusieurs jetons,
- une étape (2.7) d'émission de données si la réponse reçue est un acquittement.

2. Procédé selon la revendication 1, **caractérisé en ce que** l'étape (2.7) d'émission de données se produit également en l'absence de réception d'une réponse par le terminal ayant émis un jeton.

3. Procédé selon l'une des revendications 1 à 2, **caractérisé en ce que**, le canal de diffusion étant divisé en quartiers associés à chaque type de message, l'étape d'émission ou de réception de message est effectuée dans le quartier associé.

4. Procédé selon l'une des revendications 1 à 3, **caractérisé en ce que** les messages échangés sont constitués d'une sinusoïde pure.

5. Procédé selon l'une des revendications 1 à 4, **caractérisé en ce qu'**il comporte en outre :
- une étape d'appariement des intervalles de temps successifs constituant le médium de diffusion,
- une étape de division de l'ensemble des terminaux en deux sous-ensembles, un premier sous-ensemble de terminaux dits salués où les intervalles successifs appairés sont tels que le premier est dédié à l'émission et un second sous-ensemble de terminaux dits saluants où les intervalles successifs appairés sont tels que le premier est dédié à la réception,
- une étape où, préalablement à l'émission de données par un terminal saluant, celui-ci et tous les terminaux salués basculent et changent de statut saluant - salués.

6. Procédé selon l'une des revendications 1 à 5, **caractérisé en ce que** l'étape d'émission des données s'étale sur plusieurs intervalles de temps.

7. Terminal accédant à un médium de communication radio partagé entre une pluralité de terminaux de communication, ledit médium étant défini par un espace temps fréquence dédié au sein d'une trame TDMA, ledit terminal souhaitant émettre des données à destination des autres terminaux **caractérisé en ce qu'**il comporte :
- des moyens pour écouter le médium lors d'un premier intervalle de temps,
- si le médium est libre, des moyens pour émettre un jeton sur ce médium lors d'un second intervalle de temps,
- des moyens pour réceptionner une réponse, émise par les récepteurs ayant reçu ce jeton, lors de l'intervalle de temps suivant le second intervalle de temps,
- des moyens pour attendre et écouter le médium si la réponse est un message de collision indiquant que le récepteur émettant la réponse a reçu plusieurs jetons,
- des moyens pour émettre des données si la réponse reçue est un acquittement.

## Patentansprüche

1. Verfahren zum Zugriff auf ein Funkkommunikationsmedium, das von mehreren Kommunikationsendgeräten gemeinsam genutzt wird, wobei das Medium durch einen dedizierten Zeit-Frequenz-Raum innerhalb eines TDMA-Rahmens definiert ist, **dadurch gekennzeichnet, dass** es die folgenden Schritte umfasst, die von einem Endgerät ausgeführt werden, das Daten an andere Endgeräte senden möchte:
- einen Schritt (2.1) des Abhörens des Mediums in einem ersten Zeitintervall,
- falls das Medium frei ist, einen Schritt (2.3) des Sendens eines Tokens auf dem Medium in einem zweiten Zeitintervall,
- einen Schritt (2.5) des Empfangs einer Antwort, die von den Empfängern gesendet wurde, die dieses Token empfangen haben, in dem Zeitintervall, das auf das zweite Zeitintervall folgt,
- einen Schritt (2.1) des Wartens und Abhörens des Mediums, falls die Antwort eine Kollisionsnachricht ist, die angibt, dass der die Antwort sendende Empfänger mehrere Tokens empfangen hat,
- einen Schritt (2.7) des Sendens von Daten, falls die empfangene Antwort eine Quittierung ist.

2. Verfahren nach Anspruch 1, **dadurch gekennzeichnet, dass** der Schritt (2.7) des Sendens von Daten auch ausgeführt wird, wenn kein Empfang einer Antwort durch das Endgerät, das ein Token gesendet hat, erfolgt.

3. Verfahren nach einem der Ansprüche 1 bis 2, **dadurch gekennzeichnet, dass** der Rundsendekanal in Viertel aufgeteilt ist, die jeweils einem Nachrichtentyp zugeordnet sind, wobei der Schritt des Sendens oder des Empfangs einer Nachricht in dem zugeordneten Viertel durchgeführt wird.

4. Verfahren nach einem der Ansprüche 1 bis 3, **dadurch gekennzeichnet, dass** die ausgetauschten Nachrichten aus einer reinen Sinuswelle bestehen.

5. Verfahren nach einem der Ansprüche 1 bis 4, **dadurch gekennzeichnet, dass** es außerdem aufweist:
- einen Schritt der Paarung der aufeinander folgenden Zeitintervalle, die das Rundsendemedium bilden,
- einen Schritt der Aufteilung der Menge der Endgeräte in zwei Teilmengen, eine erste Teilmenge von sogenannten gegrüßten Endgeräten, wo die gepaarten aufeinander folgenden Intervalle so beschaffen sind, dass das erste für das Senden bestimmt ist, und eine zweite Teilmenge von sogenannten grüßenden Endgeräten, wo die gepaarten aufeinander folgenden Intervalle so beschaffen sind, dass das erste für den Empfang bestimmt ist,
- einen Schritt, in dem vor dem Senden von Daten durch ein grüßendes Endgerät dieses und alle gegrüßten Endgeräte umschalten und ihren Zustand zwischen "grüßend" und "gegrüßt" wechseln.

6. Verfahren nach einem der Ansprüche 1 bis 5, **dadurch gekennzeichnet, dass** sich der Schritt des Sendens der Daten über mehrere Zeitintervalle erstreckt.

7. Endgerät, welches auf ein Funkkommunikationsmedium zugreift, das von mehreren Kommunikationsendgeräten gemeinsam genutzt wird, wobei das Medium durch einen dedizierten Zeit-Frequenz-Raum innerhalb eines TDMA-Rahmens definiert ist, wobei das Endgerät Daten an andere Endgeräte senden möchte, **dadurch gekennzeichnet, dass** es umfasst:
- Mittel zum Abhören des Mediums in einem ersten Zeitintervall,
- falls das Medium frei ist, Mittel zum Senden eines Tokens auf diesem Medium in einem zweiten Zeitintervall,
- Mittel zum Empfangen einer Antwort, die von den Empfängern gesendet wurde, die dieses Token empfangen haben, in dem Zeitintervall, das auf das zweite Zeitintervall folgt,
- Mittel zum Warten und Abhören des Mediums, falls die Antwort eine Kollisionsnachricht ist, die angibt, dass der die Antwort sendende Empfänger mehrere Tokens empfangen hat,
- Mittel zum Senden von Daten, falls die empfangene Antwort eine Quittierung ist.

## Claims

1. Method of access to a radio communication medium shared between a plurality of communication terminals, the said medium being defined by a dedicated frequency time space within a TDMA frame, **characterized in that** it comprises the following steps by a terminal wishing to send data destined for the other terminals:
- a step (2.1) of listening to the medium during a first time interval,
- if the medium is free, a step (2.3) of sending a token on the medium during a second time interval,
- a step (2.5) of receiving a response sent by the receivers that received this token during the time interval following the second time interval,
- a step (2.1) of waiting and of listening to the medium if the response is a collision message indicating that the receiver sending the response has received several tokens;
- a step (2.7) of sending data if the response received is an acknowledgement.

2. Method according to Claim 1, **characterized in that** the step (2.7) of sending data also occurs in the absence of reception of a response by the terminal that sent a token.

3. Method according to one of Claims 1 to 2, **characterized in that**, the broadcasting channel being divided into sectors associated with each type of message, the step of message sending or receiving is performed in the associated sector.

4. Method according to one of Claims 1 to 3, **characterized in that** the messages exchanged consist of a pure sinusoid.

5. Method according to one of Claims 1 to 4, **characterized in that** it furthermore comprises:
- a step of pairing the successive time intervals constituting the broadcasting medium;
- a step of dividing the set of terminals into two subsets, a first subset of so-called greeted terminals where the paired successive intervals are such that the first is dedicated to sending and a second subset of so-called greeting terminals where the paired successive intervals are such that the first is dedicated to receiving;
- a step where, prior to the sending of data by a greeting terminal, the latter and all the greeted terminals toggle and change greeting - greeted status.

6. Method according to one of Claims 1 to 5, **characterized in that** the step of sending the data is spread over several time intervals.

7. Terminal accessing a radio communication medium shared between a plurality of communication terminals, the said medium being defined by a dedicated frequency time space within a TDMA frame, the said terminal wishing to send data destined for the other terminals, **characterized in that** it comprises:
- means for listening to the medium during a first time interval,
- if the medium is free, means for sending a token on this medium during a second time interval,
- means for receiving a response, sent by the receivers that received this token during the time interval following the second time interval,
- means for waiting and listening to the medium if the response is a collision message indicating that the receiver sending the response has received several tokens;
- means for sending data if the response received is an acknowledgement.
